# EUROPÄISCHE PATENTSCHRIFT

(11) **EP 2 855 089 B1**
(45) Veröffentlichungstag und Bekanntmachung des Hinweises auf die Patenterteilung: **02.03.2016**
(21) Anmeldenummer: 13752840.2
(22) Anmeldetag: 22.05.2013
(51) Int. Cl.: B25C 1/00, F16B 15/08, B29C 51/00

(54) **VERFAHREN ZUR HERSTELLUNG EINES BEFESTIGUNGSELEMENTESTREIFENS**
METHOD FOR THE PRODUCTION OF A STRIP FOR FASTENING ELEMENTS
PROCÉDÉ DE PRODUCTION D'UNE BAGUETTE D'ÉLÉMENT DE FIXATION

(30) Priorität: 04.06.2012 DE 102012209402
(43) Veröffentlichungstag der Anmeldung: 08.04.2015
(73) Patentinhaber: Hilti Aktiengesellschaft, 9494 Schaan (LI)
(72) Erfinder: FOSER, Thomas, CH-9496 Balzers (LI); CHEN, Ho-Tien, Tainan (TW)
(74) Vertreter: Hilti Aktiengesellschaft Corporate Intellectual Property
(86) Internationale Anmeldenummer: PCT/EP2013/060456
(87) Internationale Veröffentlichungsnummer: WO 2013/182420

(56) Entgegenhaltungen:
- EP-A1- 0 331 874
- WO-A2-03/082546
- DE-A1- 2 216 022
- DE-A1- 3 926 739
- US-A- 3 342 659

## Beschreibung

Die Erfindung betrifft ein Verfahren zur Herstellung eines Befestigungselementestreifens mit einer Mehrzahl von miteinander verbundenen Halteabschnitten zum vorübergehenden Halten jeweils eines Befestigungselements.

Bei derartigen Streifen, wie in EP0331874A1 dargestellt, umfassen die Halteabschnitte üblicherweise jeweils eine Aufnahme für einen Schaft oder einen Kopf des jeweiligen Befestigungselements. Während des Eintreibens des Befestigungselements in einen Untergrund mit Hilfe einer Befestigungsvorrichtung wird das Befestigungselement aus der Aufnahme heraus oder durch die Aufnahme hindurch gedrückt, wofür eine gewisse Kraft aufzuwenden ist. Gegebenenfalls wird dabei die Aufnahme zerstört, wodurch unter Umständen Reste der Aufnahme an dem Befestigungselement haften bleiben.

Für die Herstellung derartiger Streifen ist bekannt, einen durchgehenden Streifen in der späteren Befestigungsrichtung so zu verformen, dass eine Aufnahme entsteht, in welche das Befestigungselement ebenfalls in Befestigungsrichtung eingeführt wird.

Es ist eine Aufgabe der Erfindung, ein Verfahren zur Verfügung zu stellen, mit dem ein Befestigungselementestreifen schnell und günstig herstellbar ist.

Diese Aufgabe wird gelöst durch ein Verfahren zur Herstellung eines Befestigungselementestreifens mit einer Mehrzahl von miteinander verbundenen Aufnahmen für jeweils einen Schaft eines Befestigungselements, wobei die Aufnahmen eine Befestigungsrichtung definieren, in der das Befestigungselement von einer Befestigungsvorrichtung aus der Aufnahme heraus in einen Untergrund eintreibbar ist, wobei das Verfahren folgende Schritte umfasst:
a) Herstellen eines durchgehenden Streifens, welcher eine Streifenlängsrichtung definiert,
b) Erzeugen der Aufnahmen aus dem Material des Streifens
c) Aufnehmen der Befestigungselemente in die Aufnahmen,
wobei während Schritt b) die Aufnahmen durch einen Tiefziehprozess quer zur Befestigungsrichtung erzeugt werden. Während des Tiefziehens wird also ein Teil des Streifenmaterials in einer anderen Richtung als der Befestigungsrichtung gezogen. Die Tiefziehrichtung ist dabei die Richtung, in der der Tiefziehstempel relativ zur Tiefziehmatrize bewegt wird. Bevorzugt ist die Tiefziehrichtung senkrecht zur Befestigungsrichtung. Besonders bevorzugt ist die Tiefziehrichtung senkrecht zur Streifenlängsrichtung. Durch Streckung des tiefgezogenen Materials ist eine Materialstärke der Aufnahmen unabhängig von einer Materialstärke des durchgehenden Streifens wählbar.

Eine bevorzugte Ausführungsform des Verfahrens ist dadurch gekennzeichnet, dass während Schritt b) jenes Streifenmaterial, welches eine Aufnahme bildet, einen Durchbruch in dem Streifen hinterlässt. Gemäss einer besonders bevorzugten Ausführungsform wird in einer Längsrichtung des Streifens jeweils ein Durchbruch auf gleicher Höhe mit einer Aufnahme erzeugt. Bei einer ebenfalls besonders bevorzugten Ausführungsform wird in einer Längsrichtung des Streifens jeweils eine Aufnahme zwischen zwei Durchbrüchen erzeugt.

Eine bevorzugte Ausführungsform des Verfahrens ist dadurch gekennzeichnet, dass das Befestigungselement einen Schaft aufweist, wobei während Schritt c) der Schaft in der Aufnahme aufgenommen wird. Besonders bevorzugt umfasst das Befestigungselement weiterhin eine Spitze oder einen Kopf. Das Befestigungselement ist bevorzugt mit einem Gewinde versehen und als Schraube ausgebildet. Bei alternativen Ausführungsformen ist das Befestigungselement als Nagel, Bolzen oder Ähnliches ausgebildet.

Eine bevorzugte Ausführungsform des Verfahrens ist dadurch gekennzeichnet, dass während oder nach Schritt b) die Aufnahmen jeweils mit einem Schlitz versehen werden. Bevorzugt erstreckt sich der Schlitz entlang der Befestigungsrichtung. Besonders bevorzugt wird der Schlitz durchgängig an der Aufnahme ausgebildet. Eine bevorzugte Ausführungsform des Verfahrens ist dadurch gekennzeichnet, dass während Schritt c) die Befestigungselemente in die Aufnahmen eingeschnappt werden. Bevorzugt erfolgt dies durch den gegebenenfalls jeweils vorhandenen Schlitz hindurch. Bei bevorzugten alternativen Ausführungsformen erstreckt sich der Schlitz nur über einen Teil der Aufnahme und ist nicht durchgängig ausgebildet.

Eine bevorzugte Ausführungsform des Verfahrens ist dadurch gekennzeichnet, dass während Schritt c) die Befestigungselemente in Befestigungsrichtung in die Aufnahmen eingeführt werden. Besonders bevorzugt werden die Befestigungselemente in die Aufnahmen eingesteckt.

Eine bevorzugte Ausführungsform des Verfahrens ist dadurch gekennzeichnet, dass während oder nach Schritt b) die Aufnahmen jeweils mit einer Sollbruchstelle versehen wird. Bevorzugt erstreckt sich die Sollbruchstelle entlang der Befestigungsrichtung.

Eine bevorzugte Ausführungsform des Verfahrens ist dadurch gekennzeichnet, dass das Befestigungselement an dem Ende des Schaftes entgegen der Befestigungsrichtung einen Kopf und zwischen dem Kopf und dem Schaft einen trichterförmigen Aufweitabschnitt aufweist, dessen Aussenabmessungen quer zur Befestigungsrichtung die Innenabmessungen der Aufnahme übersteigen. Besonders bevorzugt ist der trichterförmige Aufweitabschnitt konisch ausgebildet. Bevorzugt ist die Aufnahme bei Bewegung des Befestigungselements in der Befestigungsrichtung durch den Kopf oder den Aufweitabschnitt aufweitbar, besonders bevorzugt aufbiegbar.

Nachfolgend werden bevorzugte Ausführungsbeispiele unter Bezugnahme auf die Zeichnungen näher erläutert. Es zeigen:
- Fig. 1: einen Streifen für Befestigungselemente in einer Schrägansicht,
- Fig. 2: einen Streifen für Befestigungselemente in einer Seitenansicht,
- Fig. 3: einen Streifen für Befestigungselemente in einer Ansicht in Befestigungsrichtung,
- Fig. 4: einen Streifen für Befestigungselemente in einer Ansicht in Befestigungsrichtung,
- Fig. 5: einen Streifen für Befestigungselemente in einer Ansicht in Befestigungsrichtung,
- Fig. 6: einen Streifen für Befestigungselemente in einer Schrägansicht, und
- Fig. 7: verschiedene Aufnahmen für Befestigungselemente in schematischer Ansicht.

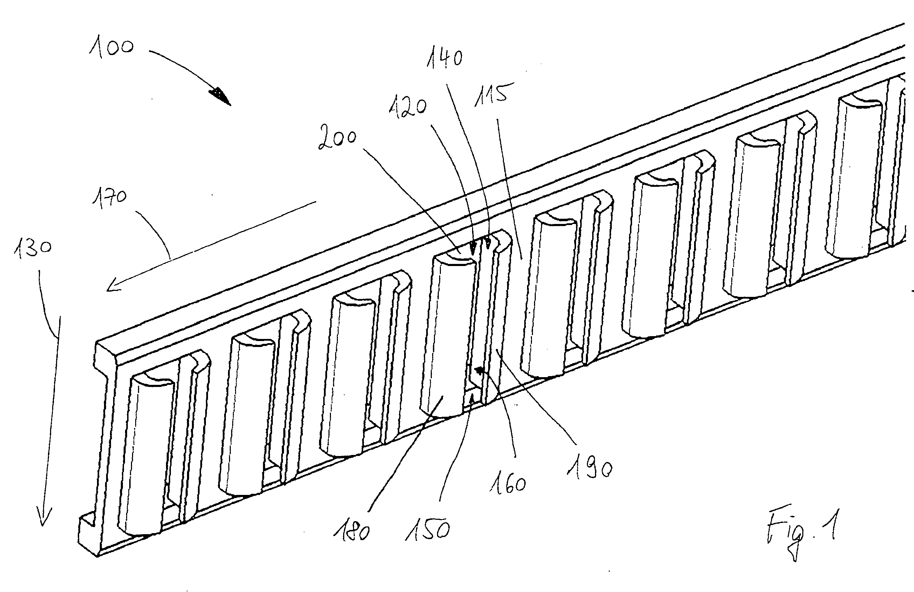

Fig. 1 zeigt eine Schrägansicht eines Streifens 100 für nicht dargestellte Befestigungselemente mit jeweils einem Schaft und einem Kopf. Der Streifen 100 ist aus Kunststoff gefertigt und umfasst eine Vielzahl von miteinander verbundenen Aufnahmen 120 zum vorübergehenden Halten jeweils eines Befestigungselements sowie jeweils zwischen zwei Aufnahmen angeordneten Verbindungsabschnitten 115. Die Befestigungselemente sind dabei bevorzugt mittig gehalten, also jeweils mit ihrem Schwerpunkt innerhalb einer Aufnahme 120. Bei nicht gezeigten Ausführungsbeispielen ist der Streifen aus einer Metallfolie oder einem Papierstreifen gefertigt.

Jede Aufnahme 120 ist für einen Schaft eines Befestigungselements vorgesehen, das in einer Befestigungsrichtung 130 aus der Aufnahme 120 heraus in einen nicht dargestellten Untergrund eintreibbar ist. Die Befestigungsrichtung 130 ist dabei senkrecht zu einer Längsrichtung 170 des Streifens orientiert. Das Befestigungselement biegt dann aufgrund seiner Bewegung in der Befestigungsrichtung 130 die Aufnahme 120 auf und schnappt mit relativ geringem Kraftaufwand aus der Aufnahme 120 aus. Zu diesem Zweck weist das Befestigungselement an dem Ende des Schaftes entgegen der Befestigungsrichtung einen Kopf und zwischen dem Kopf und dem Schaft einen trichterförmigen Aufweitabschnitt auf, dessen Aussenabmessungen quer zur Befestigungsrichtung die Innenabmessungen der Aufnahme übersteigen.

Die Aufnahme 120 weist einen Schlitz 160 auf, welcher sich durchgängig über die gesamte Länge der Aufnahme 120 entlang der Befestigungsrichtung 130 erstreckt und eine kopfseitige Stirnöffnung 140 sowie eine spitzenseitige Stirnöffnung 150 der Aufnahme 120 miteinander verbindet. Die Breite des Schlitzes 160 ist kleiner als eine Breite der Aufnahme 120, so dass das nicht gezeigte Befestigungselement durch den Schlitz 160 in die Aufnahme 120 einschnappbar und sicher in der Aufnahme 120 gehalten ist.

Die Aufnahmen 120 ragen senkrecht zu einer von der Befestigungsrichtung 130 und der Streifenlängsrichtung 170 aufgespannten Streifenebene von einem durchgehenden Streifenkern des Streifens 100 ab. Dadurch ist es einfach möglich, den Streifen 100 durch geeignete Materialwahl sowie Materialstärke ausreichend steif zu gestalten, um ein einfaches Zuführen des Streifens 100 in eine Befestigungsvorrichtung zu gewährleisten, ohne dabei auf eine für das Vereinzeln der Befestigungselemente erforderliche Flexibilität der Aufnahmen 120 zu verzichten, welche eine geringere Materialstärke aufweisen als der Kern des Streifens 100.

Zur Herstellung des Streifens 100 wird zunächst ein durchgehender Streifen hergestellt, aus dessen Material die Aufnahmen 120 erzeugt werden. Für jede Aufnahme wird dann mittels eines Stempels senkrecht zur Befestigungsrichtung 130 und senkrecht zur Streifenlängsrichtung 170 ein rechteckiger Bereich aus dem durchgehenden Streifen herausund gegen eine Gegenmatrize gezogen. Die Stirnöffnungen 140, 150 werden durch vorheriges oder gleichzeitiges Stanzen, beispielsweise durch entsprechend scharfe Kanten des Stempels, erzeugt. Der rechteckige Bereich wird während des Tiefziehens beziehungsweise Thermoformens zu den Stützwänden 180, 190 der jeweiligen Aufnahme 120 geformt. Der Schlitz 160 wird durch gleichzeitiges oder nachfolgendes Stanzen, beispielsweise durch eine entsprechend scharfe Vorderkante des Stempels, erzeugt. Die Stützwände 180 und 190 hinterlassen dabei einen Durchbruch 200 in dem Streifen 100, welcher in der Streifenlängsrichtung 170 auf gleicher Höhe mit der Aufnahme 120 angeordnet ist, da die Stützwände 180 und 190 eines Durchbruches 200 aufeinander zu gebogen ausgebildet sind und somit gemeinsam eine Aufnahme 120 bilden

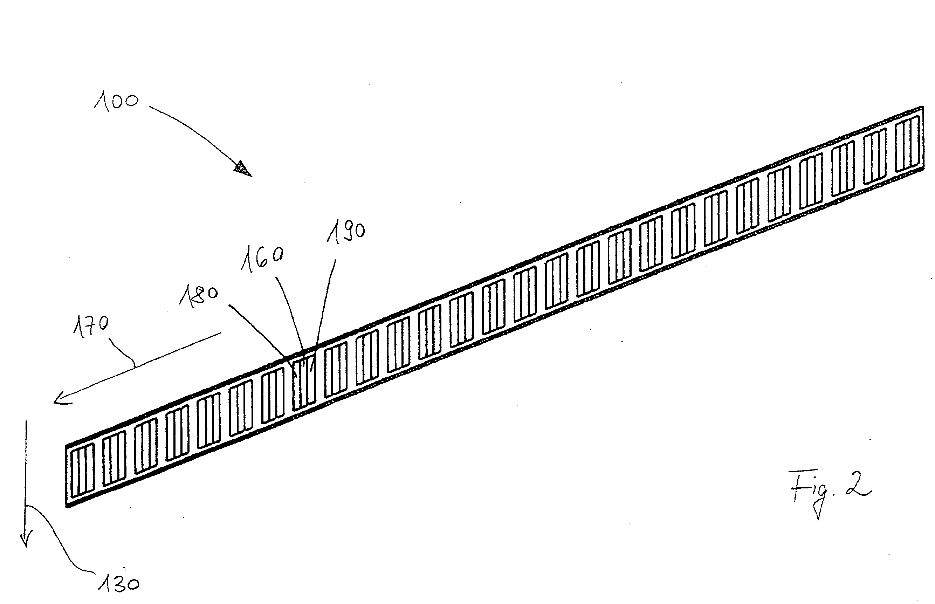

Fig. 2 zeigt eine Seitenansicht eines weiteren Streifens 100 für nicht dargestellte Befestigungselemente mit jeweils einem Schaft und einem Kopf. Im Unterschied zu dem in Fig. 1 dargestellten Streifen sind hier die Befestigungsrichtung 130 und die Streifenlängsrichtung nicht senkrecht, sondern in einem spitzen Winkel zueinander geneigt orientiert. Der Neigungswinkel beträgt dabei bevorzugt zwischen 45° und 80°, besonders bevorzugt 70°. Durch die damit verbundene versetzte Anordnung der Befestigungselemente überlappen sich deren Köpfe teilweise, so dass bei gleicher Länge des Streifens 100 mehr Befestigungselemente an dem Streifen gehalten werden.

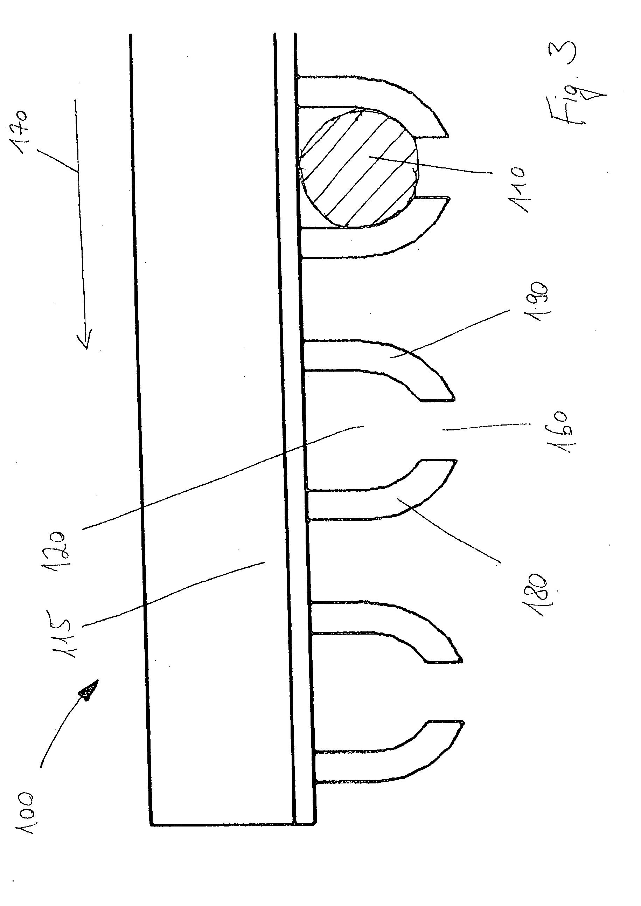

Fig. 3 zeigt den Streifen 100 aus Fig. 1 oder 2 in einer Ansicht in Befestigungsrichtung. Gleiche Bezugszeichen stehen dabei für gleiche Elemente. Zusätzlich ist eine Schraube 110 als beispielhaftes Befestigungselement im Querschnitt dargestellt, welche in einer der Aufnahmen 120 aufgenommen ist.

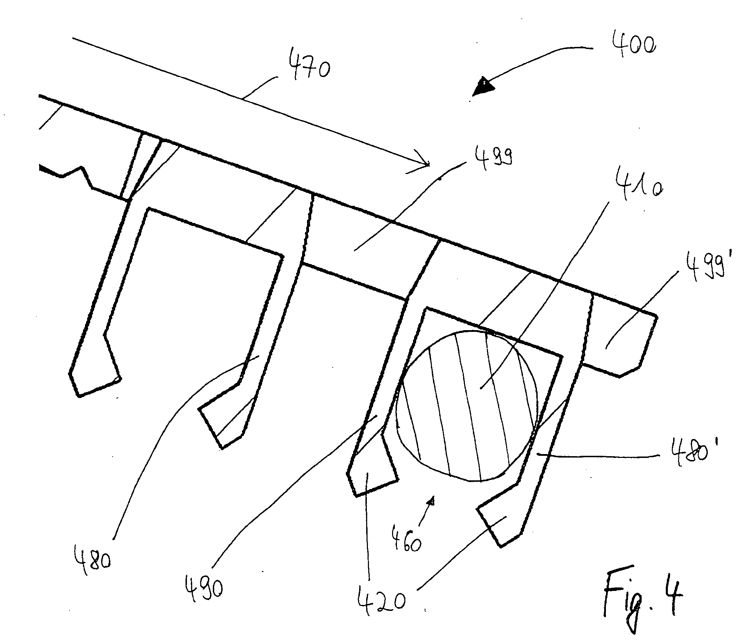

Fig. 4 zeigt einen Streifen 400 in einer Querschnittsansicht in Befestigungsrichtung, mit einem Befestigungselement 410, welches in einer Aufnahme 420 aufgenommen ist. Bei der Herstellung des Streifens 400 werden mittels eines Stempels Stützwände 480, 490 erzeugt, welche einen Durchbruch 499 in dem Streifen 400 hinterlassen. Die Stützwände des Durchbruches 499 sind derart voneinander weg gebogen ausgebildet, dass die Stützwand 490 des Durchbruchs 499 mit einer Stützwand 480' eines benachbarten Durchbruchs 499' die Aufnahme 420 bildet, wobei die Aufnahme 420 zwischen den Stützwänden 480, 490 einen in Befestigungsrichtung durchgehenden Schlitz 460 aufweist. In einer Längsrichtung 470 des Streifens 400 ist dann jeweils eine Aufnahme 420 zwischen zwei Durchbrüchen 499, 499' angeordnet.

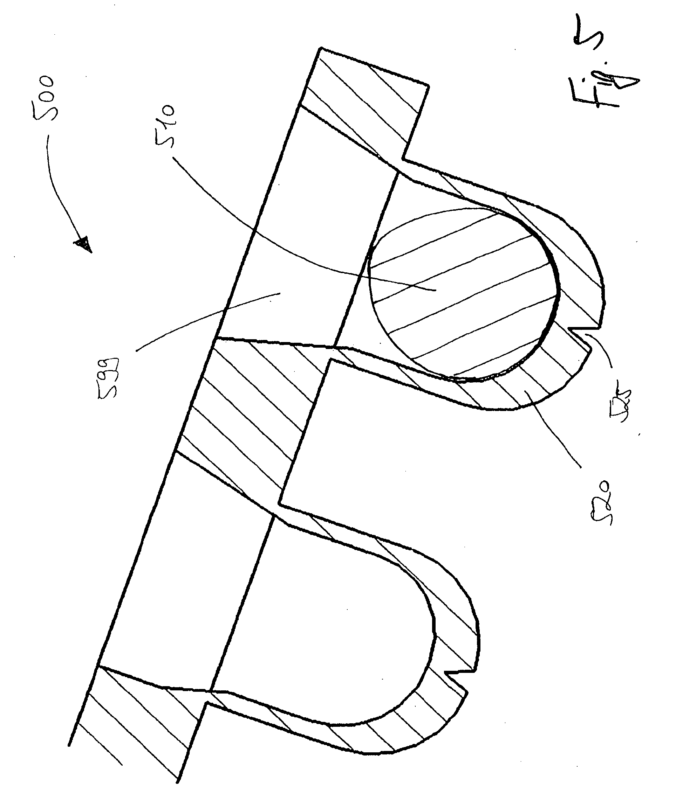

Fig. 5 zeigt einen Streifen 500 in einer Querschnittsansicht in Befestigungsrichtung, mit einem Befestigungselement 510, welches in einer Aufnahme 520 aufgenommen ist. Bei der Herstellung des Streifens 500 werden die Aufnahmen 520 nicht geschlitzt, es wird vielmehr jeweils eine einzige die Aufnahme 520 bildende Stützwand mittels eines Stempels erzeugt, einen Durchbruch 599 hinterlassend. Das Material für die Aufnahme wird dabei mittels des Stempels gegen eine Gegenmatrize gezogen. Die Gegenmatrize weist eine spitze Kante zur Erzeugung einer in Befestigungsrichtung bevorzugt durchgehenden Kerbe 525 auf, welche eine Sollbruchstelle darstellt, um das Vereinzeln des Befestigungselements 510 zu erleichtern.

Bei nicht dargestellten Ausführungsbeispielen weist alternativ oder zusätzlich der Stempel eine spitze Kante auf, so dass die Sollbruchstelle wahlweise durch eine Kerbe auf der Aussenseite der Aufnahme, durch eine Kerbe auf der Innenseite der Aufnahme oder durch eine beidseitige Schwächung des Materials der Aufnahme gebildet ist. Bei weiteren nicht dargestellten Ausführungsbeispielen werden die Aufnahmen alternativ oder zusätzlich zu einem Schlitz jeweils mit einer Sollbruchstelle versehen.

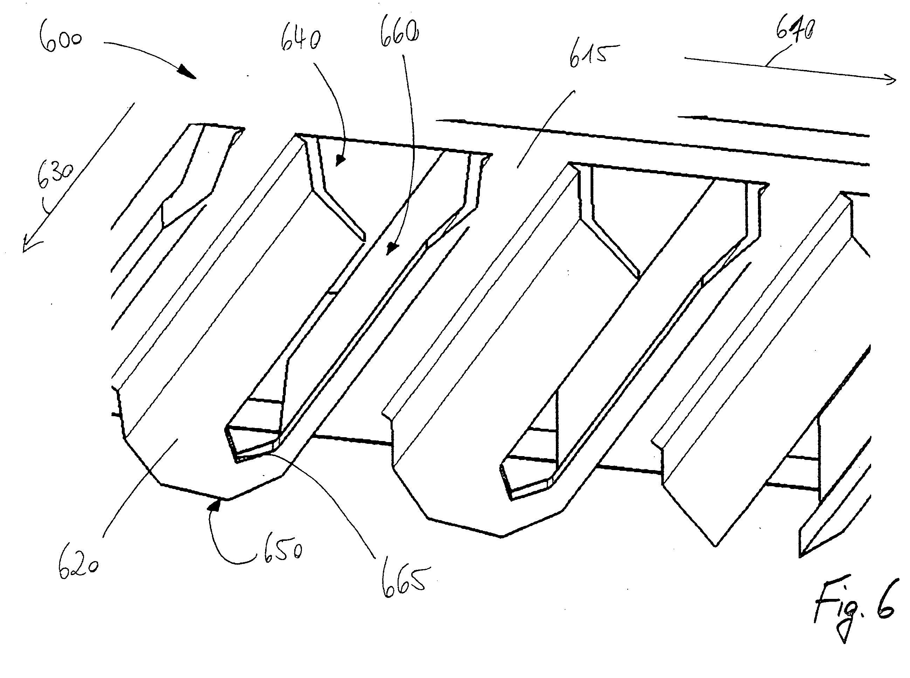

Fig. 6 zeigt eine Schrägansicht eines Streifens 600 für nicht dargestellte Befestigungselemente. Der Streifen 600 umfasst eine Vielzahl von miteinander verbundenen Aufnahmen 620 zum vorübergehenden Halten jeweils eines Befestigungselements sowie jeweils zwischen zwei Aufnahmen 620 angeordneten Verbindungsabschnitten 615. Die Befestigungselemente sind dabei bevorzugt mittig gehalten, also jeweils mit ihrem Schwerpunkt innerhalb einer Aufnahme 620.

Jede Aufnahme 620 ist für einen Schaft eines Befestigungselements vorgesehen, das in einer Befestigungsrichtung 630 aus der Aufnahme 620 heraus in einen nicht dargestellten Untergrund eintreibbar ist. Die Befestigungsrichtung 630 ist gegenüber einer Längsrichtung 670 des Streifens geneigt.

Die Aufnahme 620 weist einen Schlitz 660 auf, welcher sich ausgehend von einer kopfseitigen Stirnöffnung 640 über einen Teil der Aufnahme 620 entlang der Befestigungsrichtung 630 erstreckt und vor einer spitzenseitigen Stirnöffnung 650 der Aufnahme 120 endet. Das Ende 665 des Schlitzes 660 ist dabei zugespitzt ausgebildet, so dass das Befestigungselement aufgrund seiner Bewegung in der Befestigungsrichtung 630 die Aufnahme 620 erst aufbiegt und dann ausgehend von dem Ende 665 aufreisst, was aufgrund der Kerbwirkung mit relativ geringem Kraftaufwand möglich ist.

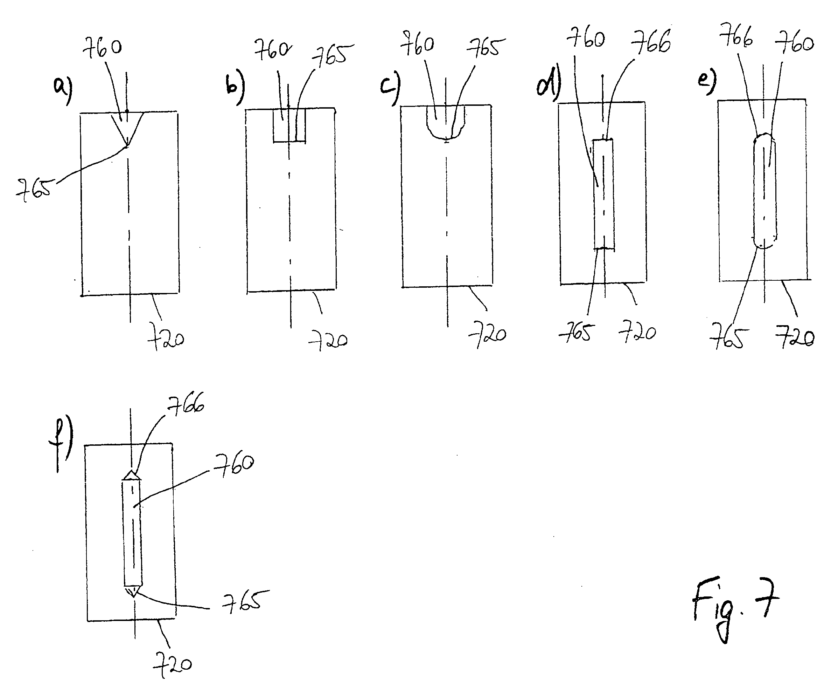

Fig. 7 zeigt mehrere Alternativen eines Schlitzes 760 an einer Aufnahme 720, wobei sich die Alternativen hauptsächlich in der Form des Endes 765 des Schlitzes 760 unterscheiden. Die Form des Schlitzendes 765 ist zugespitzt (Fig. 7a), eben (Fig. 7b) oder abgerundet (Fig. 7c). Bei weiteren Ausführungsformen ist der Schlitz 760 mit keiner der Stirnöffnungen der Aufnahme 720 verbunden, sondern besitzt zwei Enden 765, 766, die jeweils eben (Fig. 7d), abgerundet (Fig. 7e) oder zugespitzt (Fig. 7f) sind. Der Schlitz 760, insbesondere dessen Ende 765 dient jeweils unter Umständen als Sollbruchstelle beim Vereinzeln eines Befestigungselements aus der Aufnahme 720. Bei nicht gezeigten Ausführungsbeispielen sind verschiedene Formen der beiden Enden eines Schlitzes miteinander kombiniert und/oder die Aufnahme weist mehrere Schlitze auf, beispielsweise einen Schlitz gemäss Fig. 7a und einen Schlitz gemäss Fig. 7f.

Bei weiteren nicht gezeigten Ausführungsbeispielen ist die Aufnahme mit einer Sollbruchstelle in Form einer innen- und/oder aussenseitigen Kerbe, beispielsweise wie in Fig. 5 gezeigt, und mit einem oder mehreren Schlitzen, beispielsweise wie in Fig. 7a und 7f gezeigt, versehen. Bevorzugt ist dabei die Kerbe als Verlängerung des Schlitzes über dessen Ende hinaus ausgebildet und erstreckt sich besonders bevorzugt bis zur spitzenseitigen Stirnöffnung der Aufnahme.

Die vorliegende Erfindung wurde am Beispiel eines Herstellungsverfahrens für einen Streifen für Befestigungselemente mit einem Schaft und einem Kopf, insbesondere für eine Befestigungsvorrichtung, dargestellt. Es wird jedoch darauf hingewiesen, dass das erfindungsgemässe Verfahren und der erfindungsgemässe Streifen auch für andere Anwendungszwecke geeignet sind.

## Patentansprüche

1. Verfahren zur Herstellung eines Befestigunselementestreifens (100) einer Mehrzahl von miteinander verbundenen Aufnahmen (120) für jeweils einen Schaft eines Befestigungselements, wobei die Aufnahmen eine Befestigungsrichtung (130) definieren, in der das Befestigungselement von einer Befestigungsvorrichtung aus der Aufnahme heraus in einen Untergrund eintreibbar ist, wobei das Verfahren folgende Schritte umfasst:
a) Herstellen eines durchgehenden Streifens, welcher eine Streifenlängsrichtung definiert,
b) Erzeugen der Aufnahmen aus dem Material des Streifens,
c) Aufnehmen der Befestigungselemente in die Aufnahmen,
wobei während Schritt b) die Aufnahmen durch einen Tiefziehprozess quer zur Befestigungsrichtung erzeugt werden.

2. Verfahren nach Anspruch 1, wobei der Tiefziehprozess senkrecht zur Befestigungsrichtung erfolgt.

3. Verfahren nach einem der vorhergehenden Ansprüche, wobei der Tiefziehprozess senkrecht zur Streifenlängsrichtung erfolgt.

4. Verfahren nach einem der vorhergehenden Ansprüche, wobei während Schritt b) jenes Streifenmaterial, welches eine Aufnahme bildet, einen Durchbruch in dem Streifen hinterlässt.

5. Verfahren nach Anspruch 3, wobei in einer Längsrichtung des Streifens jeweils ein Durchbruch auf gleicher Höhe mit einer Aufnahme erzeugt wird.

6. Verfahren nach Anspruch 3, wobei in einer Längsrichtung des Streifens jeweils eine Aufnahme zwischen zwei Durchbrüchen erzeugt wird.

7. Verfahren nach einem der vorhergehenden Ansprüche, wobei während oder nach Schritt b) die Aufnahmen jeweils mit einem Schlitz (160) versehen werden, welcher sich insbesondere entlang der Befestigungsrichtung erstreckt.

8. Verfahren nach Anspruch 6, wobei der Schlitz (160) in der Befestigungsrichtung (130) durchgängig an der Aufnahme (120) ausgebildet wird.

9. Verfahren nach einem der vorhergehenden Ansprüche, wobei während Schritt c) die Befestigungselemente in die Aufnahme eingeschnappt werden, insbesondere durch den jeweiligen Schlitz hindurch.

10. Verfahren nach einem der vorhergehenden Ansprüche, wobei während Schritt c) die Befestigungselemente in Befestigungsrichtung in die Aufnahme eingeführt, insbesondere eingesteckt oder eingeschraubt werden.

11. Verfahren nach einem der vorhergehenden Ansprüche, wobei der Schaft ein Gewinde aufweist, welches insbesondere dazu geeignet ist, ein Gegengewinde in die Aufnahme zu schneiden, wenn das Befestigungselement in die Aufnahme aufgenommen oder aus der Aufnahme heraus in den Untergrund eingetrieben wird.

12. Verfahren nach einem der vorhergehenden Ansprüche, wobei während oder nach Schritt b) die Aufnahmen jeweils mit einer Sollbruchstelle versehen werden, welche sich insbesondere entlang der Befestigungsrichtung erstreckt.

13. Verfahren nach einem der vorhergehenden Ansprüche, wobei das Befestigungselement an dem Ende des Schaftes entgegen der Befestigungsrichtung einen Kopf und zwischen dem Kopf und dem Schaft einen trichterförmigen, insbesondere konischen Aufweitabschnitt aufweist, dessen Aussenabmessungen quer zur Befestigungsrichtung die Innenabmessungen der Aufnahme übersteigen.

14. Verfahren nach einem der vorhergehenden Ansprüche, wobei die Aufnahme bei Bewegung des Befestigungselements in der Befestigungsrichtung durch den Kopf oder den Aufweitabschnitt aufweitbar, insbesondere aufbiegbar ist.

## Claims

1. A method of producing a strip (100) for fasteners, said strip comprising a plurality of interconnected holders (120) each intended to receive the shank of a fastener, wherein the holders define a direction of installation (130) in which the fastener can be driven by a fastener installation tool from the holder into a substrate, and wherein said method comprises the hollowing steps:
a) producing a continuous strip which defines a longitudinal direction of the strip,
b) making the holders from the material of the strip,
c) accommodating the fasteners in the holders,
wherein, during step b), the holders are made perpendicular to said direction of installation by a deep-drawing process.

2. A method according to Claim 1, wherein the deep-drawing process takes place perpendicular to the direction of installation.

3. A method according to one of the preceding claims, wherein the deep-drawing process takes place perpendicular to the longitudinal direction of the strip.

4. A method according to one of the preceding claims, wherein, during step b), that material of the strip which forms a holder leaves behind an opening in the strip.

5. A method according to Claim 3, wherein, in longitudinal direction of the strip, an opening is produced on a level with each holder.

6. A method according to Claim 3, wherein, in longitudinal direction of the strip, a holder is made between every two openings.

7. A method according to one of the preceding claims, wherein, during or after step b), the holders are each provided with a slot (160) which specifically extends in direction of installation.

8. A method according to Claim 6, wherein the slot (160) is formed so as to extend right along the holder (120) in direction (130) of installation.

9. A method according to one of the preceding claims, wherein, during step c), the fasteners are snapped into place in the holders, specifically through the respective slots.

10. A method according to one of the preceding claims, wherein, during step c), the fasteners are inserted into the holders in direction of installation, and specifically are pushed or screwed in.

11. A method according to one of the preceding claims, wherein the shank has a screw thread which is especially suitable for cutting a counter-thread in the holder when the fastener is received in said holder or when it is driven from said holder into the substrate.

12. A method according to one of the preceding claims, wherein, during or after step (b), the holders are each provided with a predetermined breaking point, which specifically extends in the direction of installation.

13. A method according to one of the preceding claims, wherein, at the end of the shank in opposite direction to the direction of installation, the fastener has a head, and between the head and the shank it has a funnel-shaped, and in particular conical, expansion portion, whose outer dimensions, perpendicular to the direction of installation, exceed the inner dimensions of the holder.

14. A method according to one of the preceding claims, wherein, as the fastener moves in direction of installation, the holder is expanded, and specifically is bent open, by the head or expansion portion.

## Revendications

1. Procédé pour la fabrication d'une bande d'éléments de fixation (100) ayant une pluralité d'éléments de réception (120) reliés les uns aux autres pour respectivement une tige d'un élément de fixation, dans lequel les éléments de réception définissent une direction de fixation (130), dans laquelle l'élément de fixation peut être enfoncé par un dispositif de fixation à partir de l'élément de réception dans un support, dans lequel le procédé comporte les étapes suivantes consistant à :
a) fabriquer une bande continue qui définit une direction longitudinale de bande,
b) fabriquer les éléments de réception à partir du matériau de la bande,
c) recevoir les éléments de fixation dans les éléments de réception,
dans lequel, pendant l'étape b), les éléments de réception sont fabriqués par un procédé d'emboutissage profond transversalement à la direction de fixation.

2. Procédé selon la revendication 1, dans lequel le procédé d'emboutissage profond s'effectue perpendiculairement à la direction de fixation.

3. Procédé selon l'une des revendications précédentes, dans lequel le procédé d'emboutissage profond s'effectue perpendiculairement à la direction longitudinale de bande.

4. Procédé selon l'une des revendications précédentes, dans lequel, pendant l'étape b), chaque matériau de bande qui forme un élément de réception laisse derrière une ouverture traversante dans la bande.

5. Procédé selon la revendication 3, dans lequel, dans une direction longitudinale de la bande, une ouverture traversante est respectivement produite au même niveau qu'un élément de réception.

6. Procédé selon la revendication 3, dans lequel, dans une direction longitudinale de la bande, un élément de réception est respectivement produit entre deux ouvertures traversante.

7. Procédé selon l'une des revendications précédentes, dans lequel pendant ou après l'étape b), les éléments de réception sont respectivement munis d'une fente (160) qui s'étend en particulier le long de la direction de fixation.

8. Procédé selon la revendication 6, dans lequel la fente (160) est formée dans la direction de fixation (130) de manière continue sur l'élément de réception (120).

9. Procédé selon l'une des revendications précédentes, dans lequel, pendant l'étape c), les éléments de fixation sont encliquetés dans l'élément de réception, en particulier à travers la fente respective.

10. Procédé selon l'une des revendications précédentes, dans lequel, pendant l'étape c), les éléments de fixation sont introduits, en particulier insérés ou vissés, dans l'élément de réception dans la direction de fixation.

11. Procédé selon l'une des revendications précédentes, dans lequel la tige comporte un filetage qui est en particulier adapté pour tailler un filetage complémentaire dans l'élément de réception lorsque l'élément de fixation est reçu dans l'élément de réception ou est enfoncé dans le support à partir de l'élément de réception.

12. Procédé selon l'une des revendications précédentes, dans lequel, pendant ou après l'étape b), les éléments de réception sont respectivement munis d'un point de rupture prédéterminée qui s'étend en particulier le long de la direction de fixation.

13. Procédé selon l'une des revendications précédentes, dans lequel l'élément de fixation comporte une tête sur l'extrémité de la tige, à l'encontre de la direction de fixation, et comporte une partie d'expansion en forme d'entonnoir, en particulier conique, entre la tête et la tige, dont les dimensions extérieures transversalement à la direction de fixation sont supérieures aux dimensions intérieures de l'élément de réception.

14. Procédé selon l'une des revendications précédentes, dans lequel l'élément de réception peut s'élargir, en particulier être plié, à travers la tête ou à travers la partie d'expansion lors du mouvement de l'élément de fixation dans la direction de fixation.
